# EUROPÄISCHE PATENTSCHRIFT

(11) **EP 1 082 589 B1**
(45) Veröffentlichungstag und Bekanntmachung des Hinweises auf die Patenterteilung: **30.01.2002**
(21) Anmeldenummer: 99936295.7
(22) Anmeldetag: 20.05.1999
(51) Int. Cl.: G01F 7/00

(54) **VERBUNDWASSERZÄHLER**
COMPOUND WATER METER
COMPTEUR D'EAU DOUBLE

(30) Priorität: 26.05.1998 DE 19823310
(43) Veröffentlichungstag der Anmeldung: 14.03.2001
(73) Patentinhaber: Zenner GmbH & Co. KGaA, 66121 Saarbrücken (DE); Powogaz S.A., 60542 Poznan (PL)
(72) Erfinder: DEWALD, Hans-Peter, D-68259 Mannheim (DE)
(74) Vertreter: Vièl, Christof, Dipl.-Ing.
(86) Internationale Anmeldenummer: DE9901518
(87) Internationale Veröffentlichungsnummer: WO9961872

(56) Entgegenhaltungen:
- DE-A- 4 412 683
- DE-C- 358 906
- PATENT ABSTRACTS OF JAPAN vol. 1996, no. 06, 28. Juni 1996 (1996-06-28) & JP 08 029219 A (TOKYO GAS CO LTD), 2. Februar 1996 (1996-02-02)

## Beschreibung

Die Erfindung betrifft einen Verbundwasserzähler, insbesondere in Kurzbaulänge, mit einem in einer Nebenleitung angeordneten Nebenzähler für die Erfassung der kleineren Durchflußmengen, einem Hauptzähler für die Messung der größeren Durchflußmengen und einem hinter dem Hauptzähler angeordnetem, mittels Federdruck und Differenzdruck selbsttätig wirksamen Umschaltventil, in dessen Gehäuse die Nebenleitung einmündet und in dem ein kompakter Schalteinsatz angeordnet ist, dessen in Ventillängsachse verschiebbares Steuer- und Verschlußorgan vom Druck in der Hauptleitung in Ventilöffnungsrichtung und von dem im Ventilgehäusehinterraum vorherrschenden, durch den bei laufendem Nebenzähler entstehenden Unterdruck sowie durch Federkraft in Ventilschließrichtung beaufschlagt wird.

Bei einem solchen Verbundwasserzähler wird durch die Verbindung eines großen Hauptzählers (Woltmannzähler) mit einem kleinen Nebenzähler (Mehrstrahlzähler) ein Meßbereich erzielt, der vielfach größer ist, als der Meßbereich eines einzelnen Großwasserzählers gleicher Nennweite. Das als Federventil ausgeführte Verbundwasserzähler-Umschaltventil muß dabei die beiden Einzelzähler so korrekt für die Wassererfassung einsetzen, daß von der unteren Meßbereichsgrenze des Nebenzählers bis zur oberen Meßbereichsgrenze des Hauptzählers die vorgeschriebenen Meßfelilergrenzen genau eingehalten werden.

Der Schließkraft durch Federvorspannung im Schalteinsatz steht im Ventilschließzustand ein Öffnungsmoment entgegen, das als Produkt aus dem bei Durchströmung des Nebenzählers und der Nebenleitung entstehenden Druckverlust (Differenzdruck) und der jeweiligen abgedichteten Wirkfläche des Schließorgans entsteht.

Die derzeitigen Verbundwasserzähler werden überwiegend in Kurzbaulänge (bei jeder Zählernenngröße verschieden) hergestellt, das heißt, man kann sie ohne Leitungsveränderung jederzeit anstelle eines senkrechten Woltmannzählers in die Leitung einbauen, wenn die Durchflüsse an einer Einbaustelle so unterschiedlich geworden sind, daß der einfache Woltmannzähler diese nicht mehr genau erfassen kann.

Beispielsweise beträgt die Baulänge eines senkrechten Woltmann-Zählers der Nennweite 50 mm 270 mm. Der Verbundwasserzähler mit gleicher Baulänge ist dazu aufgeteilt in 200 mm Baulänge für den Woltmannzähler 50 mm als Hauptzähler und maximal 70 mm Baulänge für das Umschaltventil der Nennweite 50 mm.

Ein solcher Verbundwasserzähler ist aus der DE 44 12 683 bekannt. Diese Bauform kann nur verwirklicht werden, wenn der Nebenstrom unter Umgehung des Schalteinsatzes unmittelbar in den Hinterraum des Ventilgehäuses geleitet wird. Zur notwendigen Nebenstromsteuerung ist dabei ein besonderes, in der Nebenleitung angeordnetes Hilfsventil oder ähnliches erforderlich, das die Längsbewegung des Absperrorgans unterstützen muß.

Ein weiterer Verbundwasserzähler dieser Art ist aus der EP 0 668 487 A1 ersichtlich. Dort ragt die Mittelnabe mit ihren Halterippen ein bestimmtes Stück in den ausgangsseitigen Raum des Hauptzählers hinein, um eine möglichst große Baulänge für die Ventildruckfeder zu erhalten. Da der Hauptstromdurchgang gegenüber dem Nennquerschnitt des Hauptzählers sehr stark eingeengt ist, muß der Einlauftrichter zur Minderung des Druckverlustes möglichst lang und flach ausgeführt werden und ragt daher ebenfalls verhältnismäßig weit in den Hauptzähler hinein. Dieses Ineinanderfügen ist bei einer kurzen Baulänge des Woltmann-Zählers als Hauptzähler allerdings nur bedingt möglich.

Ferner ist aus der DE 39 29 381 A1 ein Verbundwasserzähler bekannt, dessen Schalteinsatz eine Kombination aus einer Druckfeder und einem Magnetverschluß aufweist, die dem Ventilöffnungsmoment entgegenwirkt, wobei die Magnetkraft anstelle eines Teils der Federkraft tritt. Nachteile dieser Ausrührung sind vorwiegend deren Herstellkosten und die Abschirmung der Magnete gegen im Wasser mitgeführte magnetisierbare Fremdstoffe.

Der Erfindung liegt nun die Aufgabe zugrunde, einen Verbundwasserzähler der eingangs genannten Art anzugeben, der ohne ein separates Steuerventil, sowie ohne einen Magnetverschluß und ohne einen langen Einlauftrichter im Schalteinsatz auskommt und dieser so ausgebildet ist, daß trotz eingeengtem Hauptdurchgang und federbelastetem Verschlußorgan eine Senkung des Durchlaufwiderstands und somit des Druckverlustes ermöglicht wird.

Gelöst wird diese erfindungsgemäß dadurch, daß die Längsführung des Steuer- und Verschlußorgangs durch mehrere, außerhalb des Hauptdurchgangs angeordnete Gleitbolzen erfolgt und daß jedem Gleitbolzen eine Druckfeder zugeordnet ist.

Dadurch, daß der erfindungsgemäße Schalteinsatz des Umschaltventils keinen zentralen Gleitbolzen mit zugehöriger Druckfeder und auch keine dazu notwendige Mittelnabe mit Halterippen insbesondere im Ventileingangsbereich aufweist, kann der Hauptwasserstrom unbehindert in den Schalteinsatz einfließen und dabei zusätzlichen Druckverlust vermeiden (keine Wirbelbildung).

Die Verlagerung der Steuer- und Verschlußorganlängsführung außerhalb des zentralen Durchflußbereichs und die dadurch mögliche Verwendung von mehreren schwächeren Gleitbolzen mit entsprechend kleineren Druckfedern als bei einem einzigen zentralen Gleitbolzen, führt zu einer stark verminderten Widerstandskraft bei größeren Durchflüssen mit maximalen Ventilhub.

Ursache dafür ist die Federrate in mm/N, die bei kleinen Federn viel niedriger gelegt werden kann, als bei starken Federn und selbst bei mehreren Federn nach der Erfindung insgesamt immer noch schwächer ist, als bei den bekannten Schalteinsätzen mit einer zentralen Druckfeder. Beispielsweise bringt eine bekannte Druckfeder der Nenngröße 50 mm bei einem Hub von 20 mm etwa eine zusätzliche Federspannung von ca. 20 N, während bei einer erfindungsgemäßen Ausführung bei gleichem Hub trotz Verwendung von 4 Federn eine Spannungszunahme von nur etwa 10 N auftritt.

Weil die außerhalb des zentralen Durchflußbereichs angeordneten Gleitbolzen im Ventilschließzustand und auch noch während des Ventilöffnungsvorgangs nicht vom Öffnungsdifferenzdruck (etwa 0,2 bis 0,3 bar) beaufschlagt werden, entfällt auch jegliche Gleitbolzenabdichtung wegen des notwendigen Gleitspiels zwischen den Gleitbolzen und dem Steuer- und Verschlußorgan.

Durch den Wegfall der zentralen, im Schalteinsatz-Hauptdurchgang sitzenden Gleitbolzennabe und der zugehörigen Halterippen kann der Durchmesser der erfindungsgemäßen Hauptdurchgang-Dichtstelle um soviel enger gelegt werden, wie Nabe und Rippen etwa an Querschnitt bedürfen und trotzdem verbleibt dann immer noch die gleiche Durchstromfläche bei beiden Ausführungen.

Die (vorzugsweise drei bis fünf) Gleitbolzen können im Schalteinsatzträger verankert und gleichmäßig auf den Umfang des Führungsdurchmessers verteilt sein.

Erfindungsgemäß ist vorgesehen, daß der Schalteinsatz eine Stauzone aufweist, die in Verbindugn mit einer Steuerscheibe des Steuer- und Verschlußorgans als Ventilöffnungs- und Ventilschließhilfe dient.

Das Arretieren der Gleitbolzen an ihrem hinteren Ende durch einen Halte- und Führungsring erbringt eine gleichmäßige Längsführung des Steuer- und Verschlußorgans und dient zusätzlich als Anschlag für die vorgespannten Druckfedern.

Die Führungsbuchsen oder ähnliches am Außenrand der Steuerscheibe garantieren eine sichere Längsbewegung des Steuer- und Verschlußorgans auf den Gleitbolzen, ohne jegliche Verkantungsmöglichkeit.

Da der Halte- und Führungsring alle Druckfedern gleichzeitig vorspannt, ergibt sich eine konstante Gesamtschließkraft für den Schalteinsatz des Umschaltventils. Ein ungleiches Spannen der Druckfedern ist somit ausgeschlossen.

Die teilweise Hohllegung des Dichtrings am Hauptdurchgang verleiht dem Dichtring mehr Elastizität und dient deshalb als Ausgleich für Dichtrings- und Fertigungstoleranzen, sowie Ausdehungseffekte durch Wasseraufnahme und Wärmeeinfluß (unterschiedliche Wasserwärme).

Die leichte Konizität der kreisförmigen Abdichtungsfläche am Hauptdurchgang erhöht die Gleitfähigkeit des Dichtrings am Steuer- und Verschlußorgan beim Öffnen und Schließen des Umschaltventils.

Die zusätzliche Halterung und Führung des Schalteinsatzes am oder im Ventilausgang verleiht dem Schalteinsatz eine erhöhte Stabilität.

Für den erfindungsgemäßen Schalteinsatz des Verbundwasserzählers ist ein einfaches Montagesystem vorgesehen. Die Druckfedern und der Halte- und Führungsring müssen nur auf die Gleitbolzen aufgeschoben werden und Federspannmuttern erbringen nach ihrem Aufschrauben auf die Gleitbolzen die gewollte Vorspannkraft der Druckfedem. Dabei ist keinerlei Einstellung oder Kontrollmessung nötig, es genügt allein der Zusammenbau der Teile.

Anhand eines Ausführungsbeispiels und der schematischen Zeichnungen nach den Figuren I bis 8 wird der erfindungsgemäße Verbundwasserzähler beschrieben.

Daher zeigt
Fig. 1 einen in Kurzbaulänge dargestellten Verbundwasserzähler in Ansicht von oben,
Fig. 2 einen Längsschnitt durch einen Schalteinsatz in Schließstellung,
Fig. 3 einen Schalteinsatz im Längsschnitt in erster Offenstellung,
Fig. 4 einen Längsschnitt durch einen Schalteinsatz in maximaler Offenstellung,
Fig.5 einen Längsschnitt durch ein Umschaltventil in Schließstellung,
Fig. 6 eine Führung des Schalteinsatz-Halterings im Ventilausgang,
Fig. 7 eine Führung des Schalteinsatz-Halterings in einer Ausdrehung des Ventilgehäuses und
Fig. 8 eine Führung und Zentrierung der Schalteinsatzbolzen in Nocken des Ventilausgangsflansches.

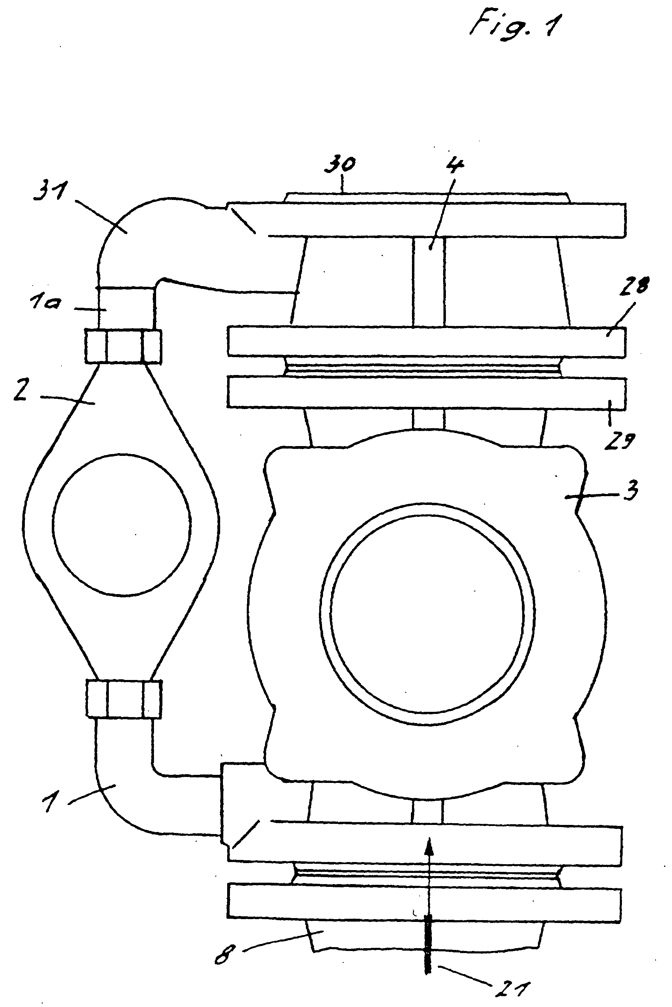

Die Fig. 1 zeigt einen Verbundwasserzähler, der aus einem Hauptzäler 3, einem über die Nebenleitungen 1 und 1a mit diesem verbundenen Nebenzähler 2 und einem Umschaltventil 4 besteht. Ein den Schalteinsatz 6 aufnehmendes Ventilgehäuse 5 ist mit seinem Eingangsflansch 28 an den Flansch 29 des Hauptzählers 3 mittels Schrauben 53 befestigt. Das in Pfeilrichtung 21 ankommende Wasser verläßt den Verbundwasserzähler über einen Ausgang 30 des Umschaltventils 4.

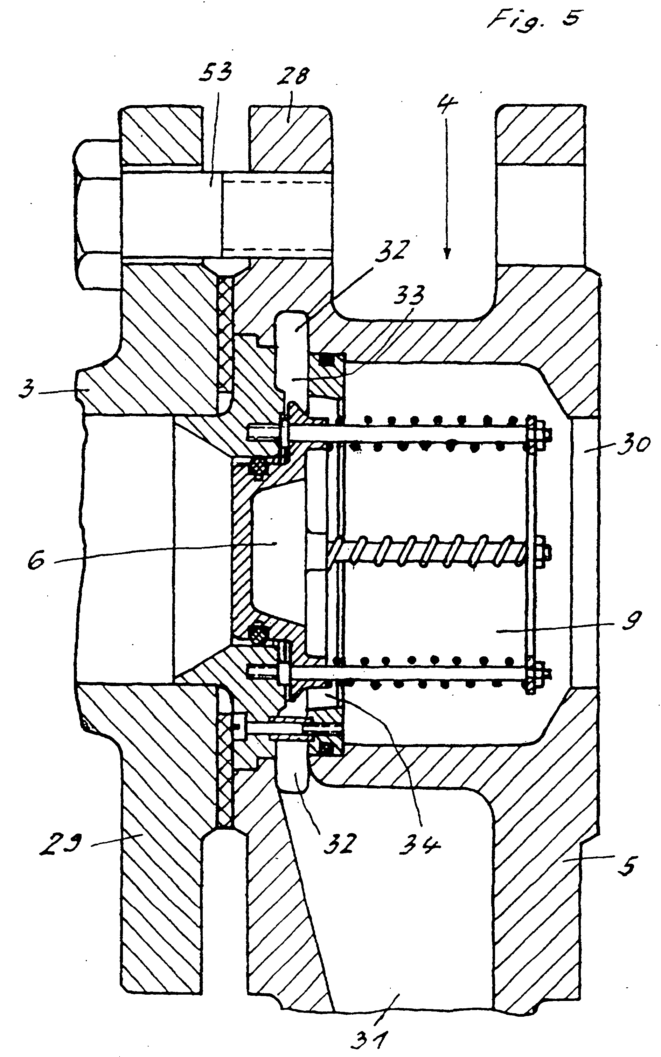

Wie aus Fig. 5 zu ersehen ist. fließt bei geschlossenem Schalteinsatz 6 das vom Nebenzähler 2 kommende Wasser durch die Nebenleitung 1a in das Ventilgehäuse 5 und gelangt über dessen Nebenkanal 31 zu einem Ringkanal 32 des Gehäuses 5. Von hier aus strömt das Wasser durch einen Zulaufkanal 33 des Schalteinsatzes 6 und durch einen Umgehungskanal 34 in den Gehäusehinterraum 9. Von dort gelangt das Wasser zu dem Ausgang 30 des Umschaltventils 4 und fließt zu einer Wasserentnahmestelle (nicht dargestellt). Den Zulaufkanal 33 durchsetzen einige Distanzbolzen 35, die als Brücke zwischen dem Schalteinsatzträger 15 und dem Stauflansch 36 dienen, wobei Schrauben 37 die beiden Teile zu einer Einheit verbinden.

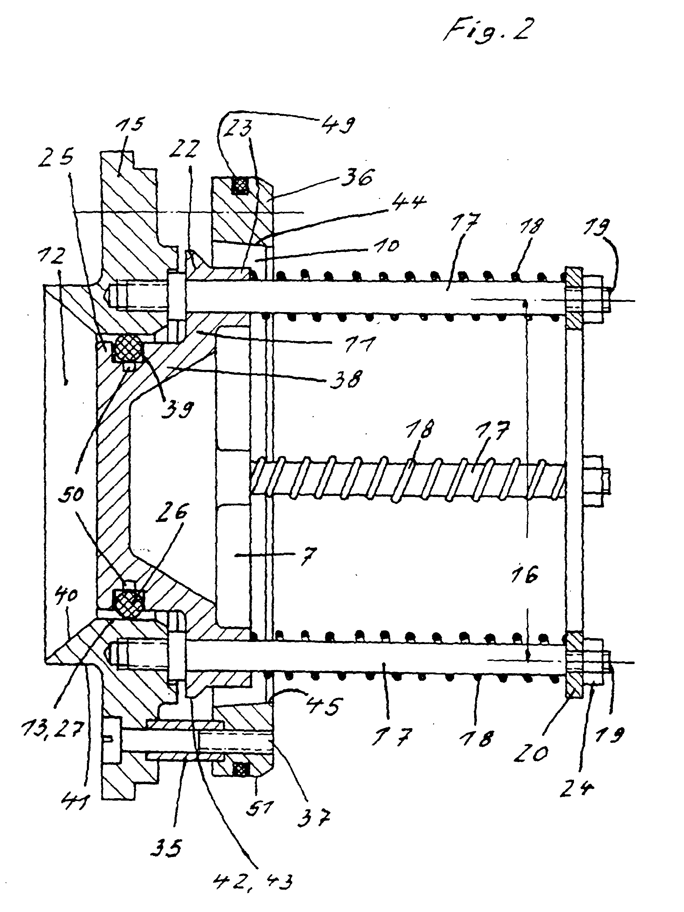

Wie aus den in einem größeren Maßstab dargestellten Fig. 2, 3 und 4 zu ersehen ist, ist auf mehreren im Schalteinsatzträger 15 verankerten Gleitbolzen 17 ein Steuer- und Verschlußorgan 7 verschiebbar angeordnet. Es ist gegen den Widerstand von mehreren vorgespannten Druckfedern 18 bewegbar, die an einem Halte- und Führungsring 20 und Federspannmuttern 24 abgestützt sind.

Das Steuer- und Verschlußorgan 7 besteht aus einem Gleitstück 38 mit einer Steuerscheibe 11, mehreren Führungsbuchsen 23, einem Dichtungshalter 25 und einem in einer Ringnute 39 gelagerten Dichtring 26. Dessen Hohllagerung erfolgt durch die Ringnute 50. Ein konisch zulaufender Eingangskanal 40 bildet den Übergang zum eingeengten Dichtsitz 13, wobei die Kanalwand 41 etwas in den Hauptzähler 3 hineinragt und sich darin grob führt.

Die Steuerscheibe 11 besitzt an ihrem Außendurchmesser 42 eine schmale Steuerkante 43, die gemeinsam mit der konischen Staustufe 44 und einer am Ende des Stauflansches 36 vorgesehenen Staukante 45, die Schaltbewegung des Steuer- und Verschlußorgans 7 steuert (Öffnungs- und Schließvorgänge des Umschaltventils).

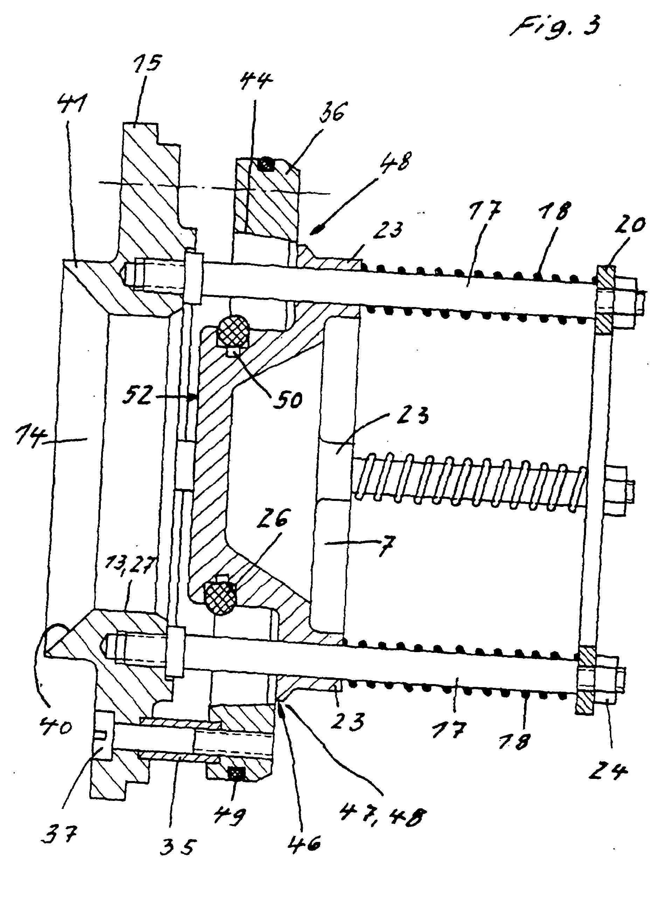

Eine in der Fig. 3 gezeigte Stauzone 46 im Bereich eines Stauspaltes 47 bildet eine hydraulische Auffangstelle 48 nach Beendigung des Öffnungshubs. Zwischenstellungen der Steuerscheibe 11 zwischen dem Ventilschließzustand und der hydraulischen Raste 48 sind wegen der Konizität der Staustufe 44 nicht möglich.

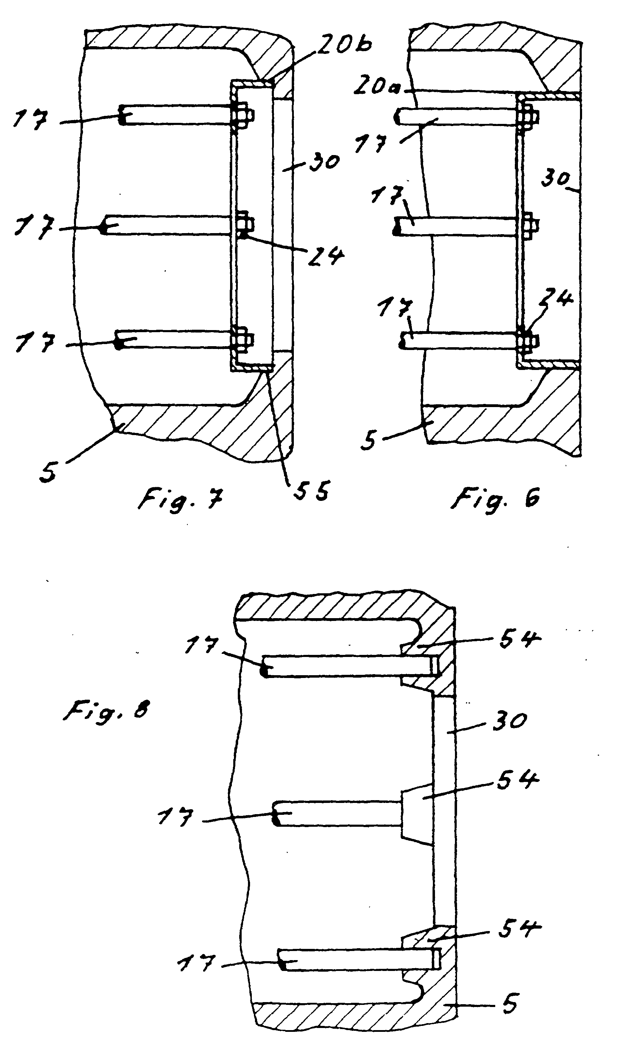

Ein Dichtring 49 am Außendurchrnesser 51 des Stauflanschs 36 verhindert einen Wasserübertritt außerhalb des Schalteinsatzes 6 in den Gehäusehinterraum 9.
Verschiedene Formen einer besonderen, zusätzlichen Abstützung des Schalteinsatzes 6 zeigen die Figuren 6, 7 und 8.

Durch die Führung des Schalteinsatzhalterings 20a im Ventilausgang 30 (Fig. 6) erhält der Schalteinsatz 6 eine erhöhte Stabilität, ohne dafür eine besondere Ventilgehäuseausbildung zu benötigen.

Den Schalteinsatz 6 in einer speziellen Gehäuseausdrehung 55 zu führen (Fig. 7), erbringt einen Ventilausgang 30, ohne jegliche Einengung.

Durch die Führung und Zentrierung des Schalteinsatzbolzen 17 in Arretierungsnocken 54 am Ausgangsflansch des Ventilgehäuses 5 (Fig. 8) entfällt der jeweilige Haltering 20, 20a oder 20b und der Schalteinsatz 6 hält trotzdem eine zusätzliche Stabilität. Die Federn 18 stützen sich an den Nocken 54 ab und erreichen dabei ihre Vorspannung.

Die Wirkungsweise des erfingungsgemäßen Verbundwasserzählers ist folgende:

Befindet sich das längsverschiebbare Steuer- und Verschlußstück 7 in der Ventilschließstellung, sperrt der am Dichtungshalter 25 aufgespannte (hohlgelagerte) Dichtring 26 den Hauptdurchgang 14 vollständig ab und das über den Nebenzähler 2 strömende Wasser fließt bei einer Wasserentnahme ungehindert über bzw. durch den Schalteinsatz 6 zu einer nicht gezeigten Wasserverbrauchsstelle.

Bei einem vorbestimmten Wasserdurchfluß (bei jeder Zählemenngröße verschieden) wird das gesamte Steuer- und Verschlußorgan 7 durch das Ventilöffnungsmoment (Druck- bzw. Wirkfläche am Ventilhauptdurchgang x Differenzdruck) gegen den Widerstand der vorgespannten Druckfedern 18 dichtend in Richtung Ventilausgang 30 geschoben, bis die Steuerkante 43 der Steuerscheibe 11 soweit in die konische Staustufe 44 eingedrungen bzw. berührungslos eingetaucht ist, daß der jetzt durch enorme Verringerung des hier vorliegenden Ringquerschnitts auf die gesamte Kreisfläche 52 der Steuerscheibe 11 einwirkende, vorübergehend stark erhöhte Differenzdruck das Steuer- und Verschlußorgan 7 schlagartig hinter die hydraulische Raste 48 drückt (Fig. 3).

Damit ist der Öffnungsvorgang des Umschaltventils 4 (Umschaltung) beendet und der Hauptzähler 3 in den Meß- bzw. Wasserfassungsvorgang eingeschaltet.

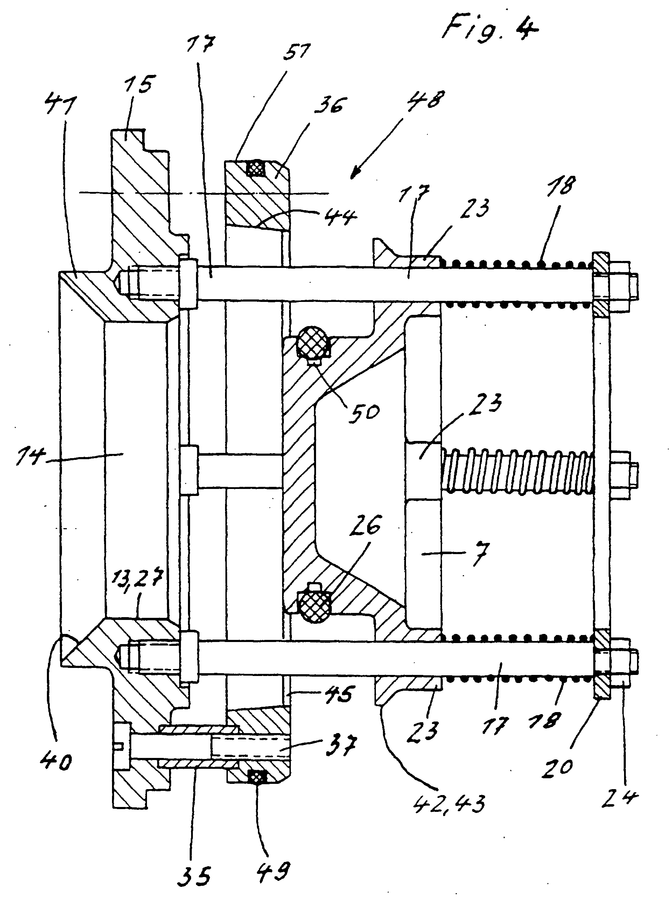

Bei einer Durchflußsteigerung bis zur für jede Zählernenngröße vorgeschriebenen maximalen Durchflußstärke gleitet dann das Steuer- und Verschlußorgang 7 unter Differenzdruckwirkung durch die fließende Wassermenge gegen den Widerstand der Druckfedem 18 soweit in Richtung Ventilausgang, bis die immer stärker werdende Federspannung den Ventilhub beendet (Fig. 4).

Damit ist die größte Offenstellung des Umschaltventils erreicht. Gegebenenfalls kann durch einen besonderen Anschlag des Steuer- und Verschlußorgans 7 am Führungsring 20 eine zusätzliche Hubbegrenzung durchgeführt werden.

Bei fallender Durchflußstärke schieben die stark gespannten Druckfedern 18 das Steuer- und Verschlußorgan 7 gegen den Widerstand des gesamten Wasserstroms solange in Richtung Ventileingang, bis die Steuerkante 43 der Steuerscheibe 11 wieder an die hydraulische Auffangstelle 48 mit der Staukante 45 gelangt. Hier nimmt das Steuerorgan 7 wieder eine Restfunktion ein. Erreicht wird das durch ein Zusammenwirken der Steuerkante 43, der Steuerscheibe 11 mit der Staukante 45 am Ende der konischen Staustufe 44 und der in dieser Situation fließenden Wassermengen (Stauspaltsystem).

Fällt der Durchfluß und damit der hier auftretende Differenzdruck auf eine durch den Stauspalt 47 herbeigeführte, vorbestimmte Stärke ab, überwinden die vorgespannten Druckfedern 18 den Stauwiderstand und das Umschaltventil 4 schließt sich infolge der konischen Erweiterung der Staustufe 44 mit zunehmender Beschleunigung.

Damit ist der Schließvorgang des Verbundwasserzählers beendet und die jetzt noch strömende Wassermenge wird solange vom Nebenzähler 2 erfaßt, bis an der Wasserentnahmestelle kein Wasser mehr benötigt wird.

## Patentansprüche

1. Verbundwasserzähler, insbesondere in Kurzbaulänge, mit einem in einer Nebenleitung (1) angeordneten Nebenzähler (2) für die Erfassung der kleineren Durchflußmengen, einem Hauptzähler (3) für die Messung der größeren Durchflußmengen und einem hinter dem Hauptzähler angeordnetem, mittels Federdruck und Differenzdruck selbsttätig wirksamen Umschaltventil (4), in dessen Gehäuse (5) die Nebenleitung (1a) einmündet und in dem ein kompakter Schalteinsatz (6) angeordnet ist, dessen in Ventillängsachse verschiebbares Steuer- und Verschlußorgan (7) vom Druck in der Hauptleitung (8) in Ventilöffnungsrichtung und von dem im Ventilgehäusehinterraum (9) vorherrschenden, durch den bei laufendem Nebenzähler (2) entstehenden Unterdruck sowie durch Federkraft in Ventilschließrichtung beaufschlagt wird, **dadurch gekennzeichnet, daß** die Längsführung des Steuer- und Verschlußorgangs (7) durch mehrere, außerhalb des Hauptdurchgangs (14) angeordnete Gleitbolzen (17) erfolgt und daß jedem Gleitbolzen (17) eine Druckfeder (18) zugeordnet ist.

2. Verbundwasserzähler gemäß Anspruch 1, **dadurch gekennzeichnet, daß** die Gleitbolzen (17) im Schalteinsatzträger (15) verankert und gleichmäßig auf den Umfang des Führungsdurchmessers (16) verteilt sind.

3. Verbundwasserzähler gemäß Anspruch 1 oder Anspruch 2, **dadurch gekennzeichnet, daß** der Schalteinsatz (6) eine Stauzone (10) aufweist, die in Verbindung mit einer Steuerscheibe (11) des Steuer- und Verschlußorgans (7) als Ventilöffnungs- und Ventilschließhilfe dient.

4. Verbundwasserzähler nach Anspruch 1, **dadurch gekennzeichnet, daß** an den Enden (19) der Gleitbolzen (17) ein Halte- und Führungsring (20) vorgesehen ist.

5. Verbundwasserzähler nach Anspruch 3, **dadurch gekennzeichnet, daß** die Steuerscheibe (11) des Steuer- und Verschlußorgans (7) an ihrem Außenrand (22) der Gleitbolzenlage und Gleitbolzenanzahl entsprechende Führungsbuchsen (23) oder ähnliches für die Längsbewegung auf den Gleitbolzen (17) aufweist.

6. Verbundwasserzähler nach Anspruch 1, **dadurch gekennzeichnet, daß** die durch den Halte- und Führungsring (20) und Bolzenmuttern (24) herbeigeführte Vorspannung der Druckfedern (18) insgesamt die Schließkraft des Schalteinsatzes (6) erbringen.

7. Verbundwasserzähler nach Anspruch 1, **dadurch gekennzeichnet, daß** die Abdichtung des Hauptdurchgangs (14) durch einen im Dichtungshalter (25) des Steuer-und Verschlußorgans (7) hohlgelagerten elastischen Dichtring (26) erfolgt.

8. Verbundwasserzähler nach Anspruch 1, **dadurch gekennzeichnet, daß** die runde Abdichtungsfläche (27) am Hauptdurchgang (14) insbesondere bei den größeren Zählernennweiten leicht konisch ausgebildet ist.

9. Verbundwasserzähler nach Anspruch 1 und weiteren, **dadurch gekennzeichnet, daß** der Schalteinsatz (6) insbesondere bei den größeren Nennweiten, eine zusätzliche Halterung und Führung am oder im Ventilausgang (30) aufweist.

## Claims

1. A compound water meter, in particular of compact design, having a bypass meter (2) which is located in a secondary conduit (1) and which serves to measure low flowrates, a main meter (3) for measuring large flowrates, and, located behind the main meter, an automatically actuated ― by means of spring pressure and differential pressure ― changeover valve (4) into the casing (5) of which the secondary conduit (1a) opens and in which a compact switch unit (6) is located, whose control and closing member (7), being movable in the direction of the longitudinal axis of the valve, is urged in the valve-open direction by the pressure in the main conduit (8) and in the valve-closed direction by the negative pressure prevailing in the space (9) at the rear of the valve casing, said negative pressure being generated when the bypass meter (2) is in operation, and also by spring pressure, **characterised in that** the control and closing member (7) is guided longitudinally by a plurality of slide pins (17) located outside the main passage (14), and that a pressure spring (18) is assigned to each slide pin (17).

2. The compound water meter of claim 1, **characterised in that** the slide pins (17) are anchored in the switch unit carrier (15) and are distributed uniformly on the periphery of the guide diameter (16).

3. The compound water meter of claim 1 or claim 2, **characterised in that the** switch unit (6) has a banking-up zone (10) which, in conjunction with a control disk (11) of the control and closing member (7), serves as valve-opening and valve-closing aid.

4. The compound water meter of claim 1, **characterised in that** a retaining and guiding ring (20) is provided at the ends (19) of the slide pins (17).

5. The compound water meter of claim 3, **characterised in that** at its outer edge (22), the control disk (11) of the control and closing member (7) has guide bushes (23) or the like ― which correspond in position and number to the slide pins ― for longitudinal movement on the slide pins (17).

6. The compound water meter of claim 1, **characterised in that** the cumulative prestress of the pressure springs (18), brought about by the retaining and guide ring (20) and the nuts (24), produces the closing force of the switch unit (6).

7. The compound water meter of claim 1, **characterised in that** the main passage (14) is sealed by an elastic sealing ring (26) seated in a recess in the seal holder (25).

8. The compound water meter of claim 1, **characterised in that** the circular sealing surface (27) tapers slightly at the main passage (14), especially in meters with large nominal diameters.

9. The compound water meter according to claim 1 and the following claims, **characterised in that** the switch unit (6) has an additional retaining and guide means at or in the valve outlet (30).

## Revendications

1. Compteur d'eau double, notamment de forme compacte, avec un compteur auxiliaire (2) placé sur une conduite secondaire (1) pour mesurer les petits débits, un compteur principal (3) pour mesurer les débits plus importants et une soupape de dérivation (4) placée en aval du compteur principal et à actionnement automatique à l'aide de ressort et de pression différentielle, dans le boîtier (5) de laquelle débouche la conduite secondaire (1a) et dans laquelle est placé un insert de déviation (6) compact dont l'organe de commande et de fermeture (7), qui peut se déplacer selon l'axe longitudinal de la soupape, est soumis dans la direction de fermeture de la soupape à la pression régnant dans la conduite principale (8) dans le sens de l'ouverture de la soupape et à la sous-pression régnant initialement dans l'espace arrière de la soupape (9) et induite par le compteur auxiliaire (2) en marche, ainsi que par la force du ressort, **caractérisé en ce que** le guidage longitudinal de l'organe de commande et de fermeture (7) est réalisé par plusieurs boulons glissants (17) disposés à l'extérieur de la zone d'entrée principale (14), et **en ce qu'**un ressort de pression (18) est affecté à chaque boulon glissant (17).

2. Compteur d'eau double selon la revendication 1, **caractérisé en ce que** les boulons glissants (17) sont ancrés dans le support pour l'insert de déviation (15) et sont répartis de façon uniforme sur le pourtour du diamètre de guidage (16).

3. Compteur d'eau double selon la revendication 1 ou la revendication 2, **caractérisé en ce que** l'insert de déviation (6) présente une zone de retenue (10) qui sert, en relation avec un disque de commande (11) de l'organe de commande et de fermeture (7), d'assistance à l'ouverture et la fermeture de la valve.

4. Compteur d'eau double selon la revendication 1, **caractérisé en ce qu**'il est prévu à l'extrémité (19) des boulons glissants (17) un anneau de retenu et de guidage (20).

5. Compteur d'eau double selon la revendication 3, **caractérisé en ce que** le disque de commande (11) de l'organe de commande et de fermeture (7) est muni sur sa périphérie (22) de bagues de guidage (23), ou analogue, dont le nombre et la position correspondent à ceux des boulons glissants, pour le mouvement longitudinal sur les boulons glissants (17).

6. Compteur d'eau double, selon la revendication 1, **caractérisé en ce que** la précontrainte des ressorts de pression (18) induite par l'anneau de retenue et de guidage (20) et les écrous de boulons (24) assure l'ensemble de la force de fermeture de l'insert déviation (6).

7. Compteur d'eau double selon la revendication 1, **caractérisé en ce que** l'étanchéité de l'entrée principale (14) est réalisée par un anneau d'étanchéité (26) élastique encastré dans le support de joint (25) de l'organe de commande et de fermeture (7).

8. Compteur d'eau double selon la revendication 1, **caractérisé en ce que** la surface d'étanchéité (27) dans l'entrée principale (14) est légèrement conique, notamment pour les diamètres nominaux de compteur plus importants.

9. Compteur d'eau double selon la revendication 1, **caractérisé en ce que** l'insert de déviation (6) est muni d'un support et d'un guidage supplémentaire près ou dans la sortie de la valve (30), notamment pour les diamètres nominaux de compteur plus importants.
